# FASCICULE DE BREVET EUROPEEN

(11) **EP 2 206 613 B1**
(45) Date de publication et mention de la délivrance du brevet: **07.11.2012**
(21) Numéro de dépôt: 10150172.4
(22) Date de dépôt: 06.01.2010
(51) Int. Cl.: B60C 17/04, B60C 17/06, B60C 15/028

(54) **Dispositif de roulage à plat pour véhicule automobile et ensemble monté l'incorporant**
Notlaufvorrichtung für Kraftfahrzeug und Aufbau mit solcher Vorrichtung
Runflat device for motor vehicle and assembly comprising same

(30) Priorité: 08.01.2009 FR 0900051
(43) Date de publication de la demande: 14.07.2010
(73) Titulaire: Hutchinson, 75008 Paris (FR)
(72) Inventeur: Marsaly, Olivier, 95290 l'Isle Adam (FR); Pelletier, Bruno, 95340 Persan (FR)
(74) Mandataire: Bolinches, Michel Jean-Marie

(56) Documents cités:
- EP-A- 0 635 384
- EP-A- 1 541 384

## Description

La présente invention concerne un dispositif de roulage à plat destiné à équiper un ensemble monté sans chambre à air pour véhicule automobile à jante de roue multiblocs, et un tel ensemble monté incorporant ce dispositif et permettant de parcourir une distance importante à vitesse relativement élevée lorsque l'ensemble monté est partiellement ou totalement dégonflé. Ce dispositif de roulage à plat est notamment utilisable pour équiper un véhicule militaire destiné à évoluer sur tous types de sols incluant des sols sablonneux.

Les dispositifs de roulage à plat connus pour ensembles montés comprenant une jante à plusieurs blocs comprennent usuellement :
- une structure annulaire de soutien qui est destinée à être montée autour de la jante en vue de soutenir le pneumatique en roulage à plat et qui est divisée en plusieurs secteurs d'anneau en arc de cercle mis bout à bout dans la direction circonférentielle, et
- des moyens de blocage des talons contre les rebords de jante, comme cela est par exemple décrit dans le document EP-A-1 900 551 au nom de la Demanderesse.

Dans ce document, ces secteurs sont surmontés par une enveloppe de soutien du pneumatique à base de caoutchouc qui déborde axialement de part et d'autre des faces latérales de la structure de soutien en les recouvrant partiellement et qui est notamment conçue pour protéger cette structure en roulage à plat et le pneumatique en roulage à l'état gonflé.

Un but de la présente invention est de proposer un dispositif de roulage à plat amélioré par rapport à celui présenté dans ce document, en ce sens qu'il garantisse notamment en toutes circonstances le maintien des secteurs d'anneau sous cette enveloppe de soutien. Ce dispositif comprend :
- une structure annulaire de soutien du pneumatique qui est destinée à être montée autour d'une jante de roue à plusieurs blocs et qui est divisée en au moins deux secteurs d'anneau en arc de cercle formant cette structure par juxtaposition dans la direction circonférentielle, l'ensemble des secteurs étant surmontés par une enveloppe de soutien radialement extérieure qui est destinée à soutenir le pneumatique suite à une chute de pression de gonflage à l'intérieur de l'ensemble monté et qui comporte deux portions latérales débordant axialement de part et d'autre des faces latérales de la structure et recouvrant partiellement ces dernières, et
- des moyens de blocage des talons contre les rebords de jante qui relient la structure annulaire de soutien aux talons.

A cet effet, un dispositif selon l'invention est tel que l'enveloppe incorpore dans ses portions latérales des moyens de maintien des secteurs qui sont aptes à s'opposer à leur déplacement axial lors d'efforts latéraux en cas de choc en roulage à l'état gonflé ou en cas de roulage à plat, de sorte que les secteurs demeurent surmontés par l'enveloppe.

On notera que ces moyens de maintien s'opposent ainsi de manière satisfaisante au « déchaussement » latéral des secteurs hors de l'enveloppe de soutien, en assurant la solidarisation et le centrage mutuels de ces secteurs uniquement via leur recouvrement par cette enveloppe.

De préférence, les secteurs d'anneau sont montés bout à bout en étant dépourvus de tout organe de connexion entre leurs extrémités en regard, i.e. en étant indépendants du fait de l'absence de connexion mécanique entre secteurs. Par montage « bout à bout », on entend dans la présente description un contact avec ou sans emboîtement mutuel des extrémités respectives des secteurs en regard.

En variante, on notera que ces extrémités de secteurs pourraient être montées avec jeu (i.e. pas bout à bout) et en étant éventuellement équipées de tels organes séparés de connexion.

A titre optionnel, la structure de soutien selon l'invention peut être montée sur une embase ou semelle annulaire disposée sur le fond de la jante et permettant à la fois de faciliter le montage du dispositif et de protéger la jante vis-à-vis des secteurs d'anneau.

Selon une autre caractéristique de l'invention, l'enveloppe de soutien, de préférence à base de caoutchouc, peut être montée sans fixation mécanique ni adhésive au contact des secteurs d'anneau en une surface de contact comprenant une surface axiale interne de l'enveloppe sensiblement cylindrique et deux surfaces radiales internes de cette enveloppe en forme de couronnes qui prolongent cette surface axiale radialement vers l'intérieur.

Selon une autre caractéristique de l'invention, lesdits moyens de maintien peuvent être formés par au moins une paire d'éléments circonférentiels de renforcement respectivement localisés dans deux zones radialement intérieures desdites portions latérales, de telle sorte que le diamètre de chaque paire d'éléments de renforcement soit inférieur au diamètre de ladite surface axiale interne de l'enveloppe.

Avantageusement, chacun desdits éléments de renforcement peut comprendre une tringle circulaire inextensible, par exemple métallique ou en aramide, qui est noyée dans la masse de ladite portion latérale l'incorporant et qui est apte à plaquer cette dernière axialement contre la face latérale correspondante des secteurs d'anneau. En variante, chaque élément circonférentiel de renforcement pourrait être constitué d'un anneau souple ou rigide formé par un enroulement d'un câblé textile inextensible (par exemple en aramide) ou d'un câble métallique, cet enroulement ne présentant donc pas une géométrie circulaire fermée mais ouverte avec deux extrémités entre lesquelles sont formées des spires.

Selon une autre caractéristique de l'invention, ladite paire d'éléments de renforcement peuvent être reliés entre eux par un élément de liaison s'étendant radialement le long desdites portions latérales et axialement à proximité immédiate de ladite surface axiale interne de l'enveloppe, cet élément de liaison étant apte à maintenir l'enveloppe contre les secteurs d'anneau. Cet élément de liaison comprend de préférence un tissu textile enserrant lesdites tringles et s'étendant sur toute la circonférence de l'enveloppe de soutien sensiblement parallèlement auxdites surfaces axiale et radiale internes de l'enveloppe, cet élément de liaison pouvant présenter sensiblement une forme de U inversé en section axiale.

Avantageusement, l'enveloppe de soutien présente une portion centrale sommitale, à partir de laquelle s'étendent lesdites portions latérales et qui peut incorporer une armature de renforcement destinée à assurer la tenue en « centrifugation » de la structure de soutien en roulage à l'état gonflé, en s'opposant à son déplacement radial par l'effet de la force centrifuge.

L'armature de renforcement est noyée dans l'enveloppe de soutien radialement au-dessus dudit élément de liaison et à distance de la face radialement externe de ladite portion sommitale, et elle peut avantageusement comprendre un ou plusieurs enroulements circonférentiels d'au moins un câble inextensible, par exemple métallique ou en aramide, cette armature étant de préférence constituée de plusieurs de ces enroulements agencés de manière coaxiale.

On notera que cette armature de renforcement pourrait comprendre des renforts textiles et/ou métalliques supplémentaires, afin d'améliorer le comportement mécanique de l'enveloppe de soutien tant en roulage à l'état gonflé en s'opposant à la « centrifugation » précitée qu'en roulage à plat.

Selon une autre caractéristique de l'invention, lesdits moyens de blocage que comprend le dispositif de roulage à plat peuvent comporter au moins une paire de cales annulaires qui sont à base de caoutchouc renforcé par exemple par des tringles et qui sont respectivement montées au contact des deux faces latérales de la structure de soutien. Ces cales, de préférence au nombre de deux, peuvent être chacune formées d'un seul tenant et présenter une section axiale sensiblement en forme de trapèze, chaque cale appuyant contre une zone d'appui radialement intérieure et de profil oblique de la face latérale correspondante de la structure de soutien.

Un ensemble monté sans chambre à air selon l'invention pour véhicule automobile comprend une jante de roue à plusieurs blocs, un pneumatique comportant des talons respectivement montés contre des rebords axialement interne et externe de la jante, et un dispositif de roulage à plat monté autour de la jante entre lesdits rebords, et cet ensemble monté est tel que le dispositif est tel que défini ci-dessus en relation avec la présente invention.

D'autres caractéristiques, avantages et détails de la présente invention ressortiront à la lecture de la description suivante de plusieurs exemples de réalisation de l'invention, donnés à titre illustratif et non limitatif, la description étant réalisée en référence aux dessins joints, parmi lesquels :
La figure 1 est une vue schématique en demi-coupe axiale d'un ensemble monté à jante à plusieurs blocs incorporant un dispositif de roulage à plat selon l'invention, et
La figure 2 est une vue en perspective éclatée du dispositif de roulage à plat de la figure 1.

Dans la présente description, les expressions « axialement interne » et « axialement externe » se réfèrent respectivement aux côtés de la jante de roue qui sont destinés à être tournés vers l'intérieur et vers l'extérieur du véhicule automobile, suite au montage sur un véhicule d'un ensemble monté comportant cette jante.

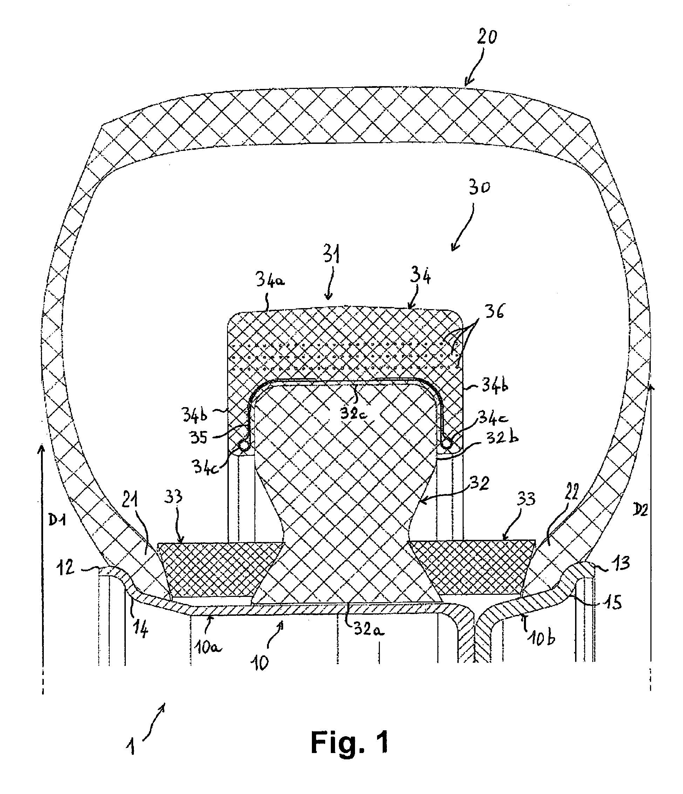

L'ensemble monté 1 selon l'invention qui est illustré à la figure 1 comprend une jante de roue 10 à deux blocs 10a et 10b solidarisés l'un avec l'autre par des moyens de fixation (non illustrés) par exemple de type boulons.

Les deux blocs 10a et 10b comportent respectivement des rebords axialement interne et externe 12 et 13 délimitant respectivement deux sièges de jante 14 et 15 s'étendant axialement à partir des rebords 12 et 13, un pneumatique 20 dont les talons 21 et 22 sont montés en appui sur les sièges 14 et 15 contre les rebords 12 et 13 et un dispositif de roulage à plat 30 monté autour de la jante 10 à l'intérieur du pneumatique 20 et destiné à soutenir celui-ci suite à une chute de pression de gonflage à l'intérieur de l'ensemble monté 1.

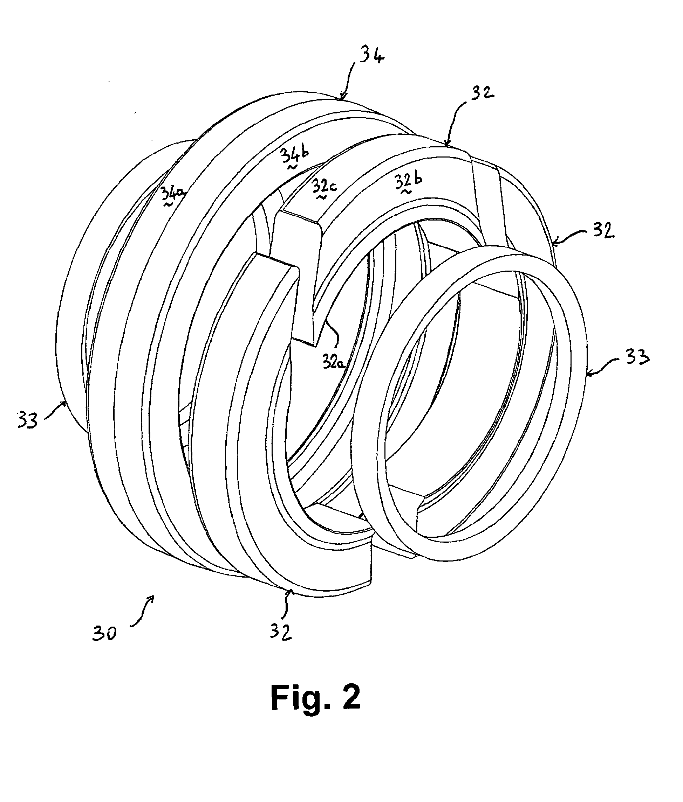

Dans l'exemple de la figure 1, le dispositif de roulage à plat 30 est monté sur un fond de jante 10 de type sensiblement plat, et il comporte :
- une structure annulaire de soutien 31 qui est destinée à être montée sur la jante 10 en vue de soutenir le pneumatique 20, suite à une chute de pression de gonflage à l'intérieur de l'ensemble monté 1, et qui est divisée en secteurs d'anneau 32 en arc de cercle (au nombre de trois dans l'exemple de la figure 2) qui ne sont pas connectés entre eux et qui forment la structure 31 par juxtaposition bout à bout de leurs extrémités en regard dans la direction circonférentielle, et
- deux cales annulaires de blocage 33 des talons 21 et 22 contre les rebords de jante 12 et 13 qui relient la structure 31 aux talons 21 et 22 en étant appliquées latéralement sur les secteurs 32 lors du montage du dispositif 30 sur la jante 10 et qui sont formées d'un seul tenant à base de caoutchouc renforcé par une tringle (non illustrée).

Chaque secteur 32 peut être réalisé en un matériau métallique, plastique ou composite, et il présente dans l'exemple de la figure 1 une forme de poutre pleine à surface externe sensiblement en forme d'osselet, i.e. à géométrie convergeant à partir d'une face radialement interne 32a puis divergeant radialement vers l'extérieur jusqu'à un tronçon supérieur 32b de largeur axiale constante et maximale pour ce secteur 32 qui se termine par une face radialement externe 32c. Ces faces 32a et 32c présentent un profil plat en section axiale dans cet exemple de réalisation, et les faces externes respectives 32c des secteurs 32 sont toutes recouvertes d'une enveloppe de soutien 34 à base de caoutchouc qui est destinée à soutenir le pneumatique 20 en roulage à plat.

On notera que chaque secteur d'un dispositif selon l'invention pourrait présenter une structure non pas pleine mais creuse (par exemple cloisonnée via une cloison radiale) et/ou un profil externe différent au niveau de ses faces latérales.

Comme illustré à la figure 1, l'enveloppe 34 surmonte radialement l'ensemble de la structure de soutien 31 (sans liaison mécanique ni adhésive) en présentant une portion sommitale 34a axialement centrale qui se prolonge radialement vers l'intérieur par deux portions latérales 34b débordant axialement de part et d'autre des faces latérales de chaque secteur 32 et recouvrant partiellement ces dernières. L'enveloppe 34 présente ainsi sensiblement une forme de U inversé en section axiale épousant le profil du tronçon supérieur 32b de chaque secteur 32, l'âme du U étant en contact avec sa face externe 32c et les ailes du U avec pratiquement toute la hauteur radiale des faces latérales de chaque tronçon 32b.

Selon l'invention, une tringle circulaire inextensible 34c (par exemple métallique ou en aramide) est noyée dans une zone radialement interne de chaque portion latérale 34b pour maintenir les secteurs 32 à l'intérieur de l'enveloppe 34 en s'opposant à leur déplacement axial lors d'efforts latéraux en cas de choc en roulage à l'état gonflé ou en cas de roulage à plat. Chaque tringle 34c est ainsi située à proximité immédiate de l'extrémité radialement intérieure de la portion latérale 34b correspondante, en sorte que le diamètre D1 de chaque tringle 34c est nettement inférieur au diamètre D2 de la surface axiale interne de la portion sommitale 34a. Ces deux tringles 34c sont reliées entre elles par un tissu textile de liaison 35 de géométrie annulaire qui les enserre et forme un U inversé en section axiale (ce tissu 35 s'étend radialement le long des portions latérales 34b et axialement le long de la surface interne de la portion sommitale 34a), ce qui a pour effet de plaquer les portions latérales 34b contre les faces latérales en regard des secteurs 32 et donc de maintenir l'enveloppe 34 contre ces derniers.

Comme également visible à la figure 1, l'enveloppe de soutien 34 incorpore en outre une armature de renforcement 36 qui est destinée à assurer la tenue en « centrifugation » des secteurs en roulage à l'état gonflé et qui est noyée dans l'enveloppe 34 radialement entre le tissu de liaison 35 et la face radialement externe de la portion sommitale 34a. Dans l'exemple de la figure 1, cette armature 36 est constituée de plusieurs enroulements circonférentiels coaxiaux de câbles inextensibles sur des diamètres différents (par exemple métalliques ou en aramide), étant précisé qu'elle pourrait comporter un seul enroulement et/ou d'autres éléments de renforcement aptes à assurer cette tenue en « centrifugation ».

Pour monter ce dispositif de roulage à plat 30 à l'intérieur de l'ensemble monté 1, on procède avantageusement comme suit.

On commence par introduire l'enveloppe de soutien 34 à l'intérieur du pneumatique 20, puis on insère les secteurs d'anneau 32 dans l'enveloppe 34 en les positionnant bout à bout. Quant aux cales de blocage 33, on peut les appliquer à tout moment entre les secteurs 32 et les talons 21 et 22 du pneumatique 20.

## Revendications

1. Dispositif de roulage à plat (30) destiné à équiper un ensemble monté (1) sans chambre à air pour véhicule automobile qui comporte une jante de roue (10) à plusieurs blocs (10a et 10b) et un pneumatique (20) comportant des talons (21 et 22) montés contre des rebords (12 et 13) de la jante, le dispositif comprenant :
- une structure annulaire de soutien (31) du pneumatique qui est destinée à être montée autour de la jante et qui est divisée en au moins deux secteurs d'anneau (32) en arc de cercle formant cette structure par juxtaposition dans la direction circonférentielle, l'ensemble des secteurs étant surmontés par une enveloppe de soutien (34) radialement extérieure qui est destinée à soutenir le pneumatique suite à une chute de pression de gonflage à l'intérieur de l'ensemble monté et qui comporte deux portions latérales (34b) débordant axialement de part et d'autre des faces latérales (32b) de la structure et recouvrant partiellement ces dernières, et
- des moyens de blocage (33) des talons contre lesdits rebords qui relient la structure annulaire de soutien aux talons,
**caractérisé en ce que** ladite enveloppe de soutien incorpore dans ses portions latérales des moyens de maintien (34c) des secteurs d'anneau qui sont formés par au moins une paire d'éléments circonférentiels de renforcement respectivement localisés dans deux zones radialement intérieures desdites portions latérales et qui sont aptes à s'opposer au déplacement axial des secteurs lors d'efforts latéraux en cas de choc en roulage à l'état gonflé ou en cas de roulage à plat, le diamètre (D1) de chaque paire d'éléments de renforcement étant nettement inférieur au diamètre (D2) d'une surface axiale interne de l'enveloppe (34) prolongée radialement vers l'intérieur par deux surfaces radiales internes de l'enveloppe en forme de couronnes en contact avec les secteurs, de sorte que ceux-ci demeurent surmontés par l'enveloppe.

2. Dispositif de roulage à plat (30) selon la revendication 1, **caractérisé en ce que** les secteurs d'anneau (32) sont montés bout à bout en étant dépourvus de tout organe de connexion entre leurs extrémités en regard.

3. Dispositif de roulage à plat (30) selon la revendication 1 ou 2, **caractérisé en ce que** ladite enveloppe de soutien (34), de préférence à base de caoutchouc, est montée sans fixation mécanique ni adhésive au contact des secteurs d'anneau (32) en une surface de contact comprenant ladite surface axiale interne de l'enveloppe sensiblement cylindrique et lesdites surfaces radiales internes de l'enveloppe.

4. Dispositif de roulage à plat (30) selon une des revendications précédentes, **caractérisé en ce que** ladite enveloppe de soutien (34) présente en section axiale une forme de U inversé épousant le profil d'un tronçon supérieur (32b) de chaque secteur, les ailes du U étant en contact par lesdites surfaces radiales internes de l'enveloppe avec pratiquement toute la hauteur radiale des faces latérales de ce tronçon supérieur, lequel présente une largeur axiale constante.

5. Dispositif de roulage à plat (30) selon une des revendications précédentes, **caractérisé en ce que** chacun desdits éléments de renforcement (34c) comprend une tringle circulaire inextensible, par exemple métallique ou en aramide, qui est noyée dans la masse de ladite portion latérale (34b) l'incorporant et qui est apte à plaquer cette dernière axialement contre la face latérale (32b) correspondante des secteurs d'anneau (32).

6. Dispositif de roulage à plat (30) selon une des revendications précédentes, **caractérisé en ce que** ladite paire d'éléments de renforcement (34c) sont reliés entre eux par un élément de liaison (35) s'étendant radialement le long desdites portions latérales (34b) et axialement à proximité immédiate de ladite surface axiale interne de l'enveloppe (34), cet élément de liaison étant apte à maintenir l'enveloppe contre les secteurs d'anneau (32).

7. Dispositif de roulage à plat (30) selon les revendications 5 et 6, **caractérisé en ce que** ledit élément de liaison (35) comprend un tissu textile enserrant lesdites tringles (34c) et s'étendant sur toute la circonférence de l'enveloppe de soutien (34) sensiblement parallèlement auxdites surfaces axiale et radiale internes de l'enveloppe, cet élément de liaison présentant de préférence sensiblement une forme de U inversé en section axiale.

8. Dispositif de roulage à plat (30) selon une des revendications précédentes, **caractérisé en ce que** ladite enveloppe de soutien (34) présente une portion centrale sommitale (34a), à partir de laquelle s'étendent lesdites portions latérales (34b) et qui incorpore une armature de renforcement (36) destinée à assurer la tenue de la structure de soutien (31) en roulage à l'état gonflé en s'opposant à son déplacement radial par l'effet de la force centrifuge.

9. Dispositif de roulage à plat (30) selon la revendication 6 ou 7 et selon la revendication 8, **caractérisé en ce que** ladite armature de renforcement (36) est noyée dans ladite enveloppe de soutien (34) radialement au-dessus dudit élément de liaison (35) et à distance de la face radialement externe de ladite portion sommitale (34a).

10. Dispositif de roulage à plat (30) selon la revendication 9, **caractérisé en ce que** ladite armature de renforcement (36) comprend un ou plusieurs enroulements circonférentiels d'au moins un câble inextensible, par exemple métallique ou en aramide, cette armature étant de préférence constituée de plusieurs de ces enroulements agencés de manière coaxiale.

11. Dispositif de roulage à plat (30) selon une des revendications précédentes, **caractérisé en ce que** lesdits moyens de blocage (33) comportent au moins une paire de cales annulaires à base de caoutchouc renforcé et respectivement montées au contact des deux faces latérales de la structure de soutien (31).

12. Dispositif de roulage à plat (30) selon la revendication 11, **caractérisé en ce que** lesdites cales (33), au nombre de deux, sont chacune formées d'un seul tenant et présentent une section axiale sensiblement en forme de trapèze, chaque cale appuyant contre une zone d'appui radialement intérieure et de profil oblique de la face latérale correspondante de la structure de soutien (31).

13. Ensemble monté (1) sans chambre à air pour véhicule automobile, comprenant une jante de roue (10) à plusieurs blocs (10a et 10b) et à fond de jante sensiblement plat, un pneumatique (20) comportant des talons (21 et 22) respectivement montés contre des rebords axialement interne et externe (12 et 13) de la jante, et un dispositif de roulage à plat (30) monté autour de la jante entre ces rebords, **caractérisé en ce que** ce dispositif est tel que défini à l'une des revendications précédentes.

## Claims

1. A flat-running device (30) intended for equipping a mounted assembly (1) without an air chamber for a motor vehicle, which comprises a wheel rim (10) with a plurality of blocks (10a and 10b) and a tire (20) comprising beads (21 and 22) mounted against flanges (12 and 13) of the rim, the device comprising:
- an annular structure (31) for supporting the tire, which is intended to be mounted around the rim and which is divided into at least two ring sectors (32) in the form of an arc of a circle forming this structure by being juxtaposed in the circumferential direction, all the sectors being surmounted by a radially outer support casing (34) which is intended for supporting the tire after an inflation pressure drop inside the mounted assembly and which comprises two lateral portions (34b) projecting axially on either side of the lateral faces (32b) of the structure and partially covering these faces, and
- means (33) for locking the beads against said flanges, which connect the annular supporting structure to the beads,
**characterised in that** said support casing incorporates in its lateral portions means (34c) for holding the ring sectors which are formed by at least one pair of circumferential reinforcing elements respectively located in two radially inner zones of said lateral portions (34b) and which are capable of opposing the axial displacement of the sectors under lateral forces in the event of a shock during running in the inflated state or in the event of running flat, the diameter (D1) of each pair of reinforcing elements being markedly smaller than the diameter (D2) of an inner axial surface of the casing (34) prolonged radially inward by two collar-shaped inner radial surfaces of the casing in contact with the sectors, so that these sectors remain surmounted by the casing.

2. The flat-running device (30) as claimed in claim 1, **characterised in that** the ring sectors (32) are mounted end to end, being free of any connecting member between their mutually confronting ends.

3. The flat-running device (30) as claimed in claim 1 or 2, **characterised in that** said support casing (34), preferably rubber-based, is mounted without mechanical or adhesive fastening in contact with the ring sectors (32) in a contact surface comprising said substantially cylindrical inner axial surface of the casing and said inner radial surfaces of the casing.

4. The flat-running device (30) as claimed in one of the preceding claims, **characterised in that** said support casing (34) has in axial section the form of an upturned U matching the profile of an upper portion (32b) of each sector, the wings of the U being in contact with substantially the entire radial height of the lateral faces of this upper portion by said inner radial surfaces of the casing, this upper portion having a constant axial width.

5. The flat-running device (30) as claimed in one of the preceding claims, **characterised in that** each of said reinforcing elements (34c) comprises a non-extendible circular rod, for example metallic or made from aramid, which is embedded in the mass of said lateral portion (34b) incorporating it and which is capable of laying the latter axially against the corresponding lateral face (32b) of the ring sectors (32).

6. The flat-running device (30) as claimed in one of the preceding claims, **characterised in that** said pair of reinforcing elements (34c) are connected to one another by means of a connecting element (35) extending radially along said lateral portions (34b) and axially in the immediate vicinity of said inner axial surface of the casing (34), this connecting element being capable of holding the casing against the ring sectors (32).

7. The flat-running device (30) as claimed in claims 5 and 6, **characterised in that** said connecting element (35) comprises a textile fabric gripping said rods (34c) and extending over the entire circumference of the support casing (34), substantially parallel to said inner axial and radial surfaces of the casing, this connecting element preferably being substantially in the form of an upturned U in axial section.

8. The flat-running device (30) as claimed in one of the preceding claims, **characterised in that** said support casing (34) has a top central portion (34a), from which said lateral portions (34b) extend and which incorporates a reinforcing insert (36) intended for ensuring the stability of the supporting structure (31) during running in the inflated state by opposing the radial displacement of the latter as a result of the centrifugal force effect.

9. The flat-running device (30) as claimed in claim 6 or 7 and as claimed in claim 8, **characterised in that** said reinforcing insert (36) is embedded in said support casing (34) radially above said connecting element (35) and at a distance from the radially outer face of said top portion (34a).

10. The flat-running device (30) as claimed in claim 9, **characterised in that** said reinforcing insert (36) comprises one or more circumferential windings of at least one non-extendible cord, for example metallic or made from aramid, this reinforcing insert preferably consisting of a plurality of these windings arranged coaxially.

11. The flat-running device (30) as claimed in one of the preceding claims, **characterised in that** said locking means (33) comprise at least one pair of annular wedges based on reinforced rubber and respectively mounted in contact with the two lateral faces of the supporting structure (31).

12. The flat-running device (30) as claimed in claim 11, **characterised in that** said wedges (33), of which there are two, are each formed in one piece and have a substantially trapezoidal axial section, each wedge bearing against a radially inner bearing zone of oblique profile of the corresponding lateral face of the supporting structure (31).

13. A mounted assembly (1) without an air chamber for a motor vehicle, comprising a wheel rim (10) with a plurality of blocks (10a and 10b) and with a substantially flat rim bottom, a tire (20) comprising beads (21 and 22) respectively mounted against axially inner and outer flanges (12 and 13) of the rim, and a flat-running device (30) mounted around the rim between these flanges, **characterised in that** this device is as defined in one of the preceding claims.

## Patentansprüche

1. Notlaufvorrichtung (30), die dazu vorgesehen ist, eine montierte Baugruppe (1) ohne Luftkammer für ein Kraftfahrzeug auszustatten, die eine Radfelge (10) mit mehreren Blöcken (10a und 10b) und einen Reifen (20) mit in Anlage an Rändern (12 und 13) der Felge angebrachten Absätzen (21 und 22) aufweist, wobei die Vorrichtung Folgendes aufweist:
- eine ringförmige Struktur (31) zum Stützen des Reifens, die dazu vorgesehen ist, um die Felge herum angebracht zu sein und in mindestens zwei kreisbogenförmige Ringsegmente (32) unterteilt ist, die diese Struktur durch Aneinanderreihung in Umfangsrichtung bilden, wobei über der Gesamtheit der Segmente ein radial äußerer Stützmantel (34) angeordnet ist, der dazu vorgesehen ist, den Reifen nach einem Abfall des Reifendrucks innerhalb der montierten Baugruppe zu stützen, und der zwei Seitenabschnitte (34b) aufweist, die auf der einen und auf der anderen Seite der Seitenflächen (32b) der Struktur axial hervorstehen und diese teilweise bedecken, und
- Mittel (33) zur Blockierung der Absätze gegen diese Ränder, die die ringförmige Stützstruktur mit den Absätzen verbinden,
**dadurch gekennzeichnet, dass** der Stützmantel in seinen Seitenabschnitten Mittel (34c) zum Halten der Ringsegmente aufnimmt, die durch mindestens zwei umlaufende Verstärkungselemente gebildet sind, die jeweils in zwei radial inneren Bereichen der Seitenabschnitte angeordnet sind und bei seitlichen Einwirkungen im Fall eines Schocks bei der Fahrt im luftgefüllten Zustand oder im Fall des Fahrens auf der Felge der axialen Verlagerung der Segmente entgegenwirken können, wobei der Durchmesser (D1) jedes Verstärkungselementenpaars deutlich kleiner ist als der Durchmesser (D2) einer axialen Innenfläche des Mantels (34), die radial nach innen durch zwei radial innere, kranzförmige Flächen des Mantels, die die Segmente berühren, verlängert ist, so dass der Mantel weiterhin über diese angeordnet ist.

2. Notlaufvorrichtung (30) nach Anspruch 1, **dadurch gekennzeichnet, dass** die Ringsegmente (32) aneinandergereiht sind und dabei keinerlei Verbindungselement zwischen ihren gegenüberliegenden Enden aufweisen.

3. Notlaufvorrichtung (30) nach Anspruch 1 oder 2, **dadurch gekennzeichnet, dass** der Stützmantel (34), der vorzugsweise auf Kautschukbasis hergestellt ist, ohne mechanische oder haftende Befestigung in Kontakt mit den Ringsegmenten (32) angebracht ist unter Bildung einer Kontaktfläche, die die im Wesentlichen zylindrische axiale Innenfläche des Mantels und die radialen Innenflächen des Mantels umfasst.

4. Notlaufvorrichtung (30) nach einem der vorhergehenden Ansprüche, **dadurch gekennzeichnet, dass** der Stützmantel (34) im Axialschnitt die Form eines umgedrehten U hat, das sich an das Profil eines oberen Teilabschnitts (32b) jedes Segments anschmiegt, wobei die Schenkel des U über die radialen Innenflächen des Mantels praktisch die gesamte radiale Höhe der Seitenflächen dieses oberen Teilabschnitts berühren, der eine konstante axiale Breite hat.

5. Notlaufvorrichtung (30) nach einem der vorhergehenden Ansprüche, **dadurch gekennzeichnet, dass** jedes Verstärkungselement (34c) eine nicht dehnbare kreisförmige Leiste aufweist, die beispielsweise aus Metall oder aus Aramid besteht und in der Masse des Seitenabschnitts (34b), der sie aufnimmt, eingebettet ist und diesen axial gegen die entsprechende Seitenfläche (32b) der Ringsegmente (32) pressen kann.

6. Notlaufvorrichtung (30) nach einem der vorhergehenden Ansprüche, **dadurch gekennzeichnet, dass** die beiden Verstärkungselemente (34c) über ein Verbindungselement (35) miteinander verbunden sind, das sich radial entlang der Seitenabschnitte (34b) und axial in unmittelbarer Nähe der axialen Innenfläche des Mantels (34) erstreckt, wobei dieses Verbindungselement den Mantel in Anlage an den Ringsegmenten (32) halten kann.

7. Notlaufvorrichtung (30) nach den Ansprüchen 5 und 6, **dadurch gekennzeichnet, dass** das Verbindungselement (35) ein Textilgewebe umfasst, das die Leisten (34c) umschließt und sich im Wesentlichen parallel zu der axialen und radialen Innenfläche des Mantels über den gesamten Umfang des Stützmantels (34) erstreckt, wobei dieses Verbindungselement im Axialschnitt vorzugsweise im Wesentlichen die Form eines umgedrehten U hat.

8. Notlaufvorrichtung (30) nach einem der vorhergehenden Ansprüche, **dadurch gekennzeichnet, dass** der Stützmantel (34) einen mittleren Scheitelabschnitt (34a) aufweist, ausgehend von dem sich die Seitenabschnitte (34b) erstrecken und in dem eine Verstärkungsbewehrung (36) aufgenommen ist, die dazu vorgesehen ist, die Beständigkeit der Stützstruktur (31) beim Fahren im luftgefüllten Zustand zu gewährleisten, indem sie ihrer radialen Verlagerung durch die Wirkung der Zentrifugalkraft entgegenwirkt.

9. Notlaufvorrichtung (30) nach Anspruch 6 oder 7 und nach Anspruch 8, **dadurch gekennzeichnet, dass** die Verstärkungsbewehrung (36) radial über dem Verbindungselement (35) und in einem Abstand zu der radial äußeren Fläche des Scheitelabschnitts (34a) in dem Stützmantel (34) eingebettet ist.

10. Notlaufvorrichtung (30) nach Anspruch 9, **dadurch gekennzeichnet, dass** die Verstärkungsbewehrung (36) eine oder mehrere Umfangswicklungen mindestens eines nicht dehnbaren Kabels umfasst, das beispielsweise aus Metall oder Aramid besteht, wobei diese Bewehrung vorzugsweise aus mehreren dieser Wicklungen besteht, die koaxial angeordnet sind.

11. Notlaufvorrichtung (30) nach einem der vorhergehenden Ansprüche, **dadurch gekennzeichnet, dass** die Blockierungsmittel (33) mindestens zwei ringförmige Keile umfassen, die auf Basis von verstärkten Kautschuk hergestellt sind und jeweils in Kontakt mit den beiden Seitenflächen der Stützstruktur (31) angebracht sind.

12. Notlaufvorrichtung (30) nach Anspruch 11, **dadurch gekennzeichnet, dass** die Keile (33), von denen zwei vorhanden sind, jeweils einstückig ausgebildet sind und einen im Wesentlichen trapezförmigen Axialschnitt aufweisen, wobei jeder Keil gegen einen radial inneren Auflagebereich mit schrägem Profil der entsprechenden Seitenfläche der Stützstruktur (31) drückt.

13. Montierte Baugruppe (1) ohne Luftkammer für ein Kraftfahrzeug, die eine Radfelge (10) mit mehreren Blöcken (10a und 10b) und einem im Wesentlichen flachen Felgenboden, einen Reifen (20) mit Absätzen (21 und 22), die jeweils in Anlage an einem axial inneren und axial äußeren Rand (12 und 13) der Felge angebracht sind, und eine Notlaufvorrichtung (30) aufweist, die zwischen diesen Rändern um die Felge herum angebracht ist, **dadurch gekennzeichnet, dass** diese Vorrichtung eine Vorrichtung nach einem der vorhergehenden Ansprüche ist.
